# FASCICULE DE BREVET EUROPEEN

(11) **EP 0 999 517 B1**
(45) Date de publication et mention de la délivrance du brevet: **04.06.2003**
(21) Numéro de dépôt: 98120833.3
(22) Date de dépôt: 03.11.1998
(51) Int. Cl.: G06K 19/07

(54) **Transpondeur actif rechargeable**
Wiederladbarer aktiver Transponder
Rechargable active transponder

(43) Date de publication de la demande: 10.05.2000
(73) Titulaire: EM Microelectronic-Marin SA, 2074 Marin (CH)
(72) Inventeur: Roz, Thierry, 2515 Prêles (CH)
(74) Mandataire: Balsters, Robert

(56) Documents cités:
- GB-A- 2 292 866
- US-A- 4 962 485

## Description

La présente invention concerne le domaine des transpondeurs actifs et, plus précisément, des transpondeurs actifs commutables en transpondeurs passifs.

Il existe classiquement un grand nombre de dispositifs portatifs pour réaliser l'identification à distance d'un objet inconnu. Un tel dispositif portatif contient des données pouvant être transférées, sous forme de signaux radioélectriques, entre une station de base fixe servant d'émetteur-récepteur et ce dispositif. On réalise usuellement un tel dispositif portatif en utilisant un transpondeur.

On rappelle qu'il existe classiquement deux types de transpondeurs : les transpondeurs passifs et les transpondeurs actifs.

Un transpondeur passif est agencé pour convertir un signal radioélectrique provenant d'une station de base, en une tension électrique qui fournit ensuite la puissance électrique nécessaire au fonctionnement du transpondeur.

Un tel transpondeur passif comprend une antenne agencée pour pouvoir recevoir et émettre des signaux radioélectriques contenant des données, un condensateur de stockage connecté à l'antenne, pour pouvoir stocker de l'énergie électrique reçue par l'antenne, et un circuit intégré connecté à l'antenne et au condensateur de stockage, pour pouvoir traiter les données reçues par l'antenne, et fournir à cette dernière d'autres données à émettre sous forme de signal radioélectrique. On note que le condensateur de stockage réalise, dans un tel transpondeur, la fourniture de l'alimentation électrique du circuit intégré.

Un inconvénient d'un tel transpondeur passif est que l'interrogation à distance de ce transpondeur nécessite une faible distance entre la station de base et ce transpondeur, cette distance étant de l'ordre de quelques mètres. En effet, il est nécessaire que le transpondeur passif se trouve à une faible distance de la station de base pour que ce transpondeur reçoive l'énergie suffisante à son fonctionnement. Dans le cas où un tel transpondeur passif est incorporé dans une clé de porte d'un véhicule, il est donc nécessaire que l'utilisateur de la clé se trouve à une faible distance du véhicule.

Un transpondeur actif est agencé pour transmettre des données sur de grandes distances de l'ordre de plusieurs centaines de mètres. En effet, l'interrogation à distance d'un tel transpondeur actif ne nécessite pas une faible distance entre la station de base et ce transpondeur, puisqu'il ne se produit pas un transfert d'énergie de la station de base vers le transpondeur.

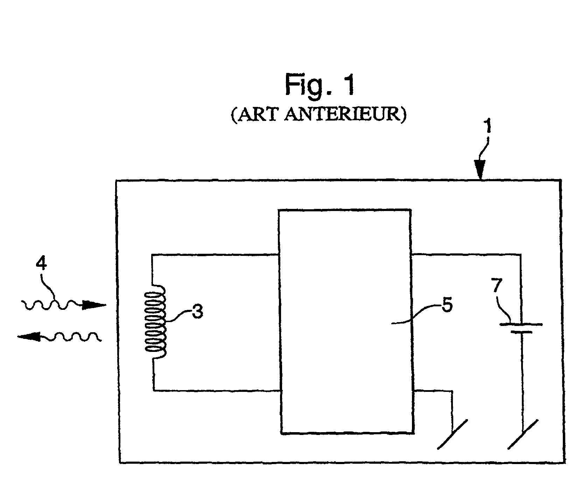

La figure 1 représente un tel transpondeur actif désigné par la référence 1. Ce transpondeur comprend une antenne 3 agencée pour pouvoir recevoir et émettre des signaux radioélectriques 4 contenant des données, un circuit intégré 5 connecté à l'antenne 3, pour pouvoir traiter des données reçues par l'antenne 3, et fournir à cette dernière d'autres données à émettre sous forme de signal radioélectrique. Le transpondeur actif 1 comprend en outre une batterie 7 pouvant fournir l'alimentation des différents composants du transpondeur 1.

Un inconvénient du transpondeur actif 1 est qu'il fonctionne normalement, tant que la batterie 7 fournit une tension électrique suffisante pour alimenter l'ensemble des composants du transpondeur 1. Dans le cas où ce dernier est incorporé dans une clé de porte d'un véhicule, dès que la batterie 7 ne fournit plus un niveau de tension suffisant pour assurer le bon fonctionnement du transpondeur 1, ce dernier ne permet plus de fournir la commande de l'ouverture de la porte, ce qui est généralement gênant pour l'utilisateur du véhicule.

Il existe également dans l'état de la technique des transpondeurs actifs "mixtes" ou "duals", c'est-à-dire des transpondeurs actifs commutables en transpondeurs passifs. Le document GB 2.292.866 décrit un tel transpondeur dual.

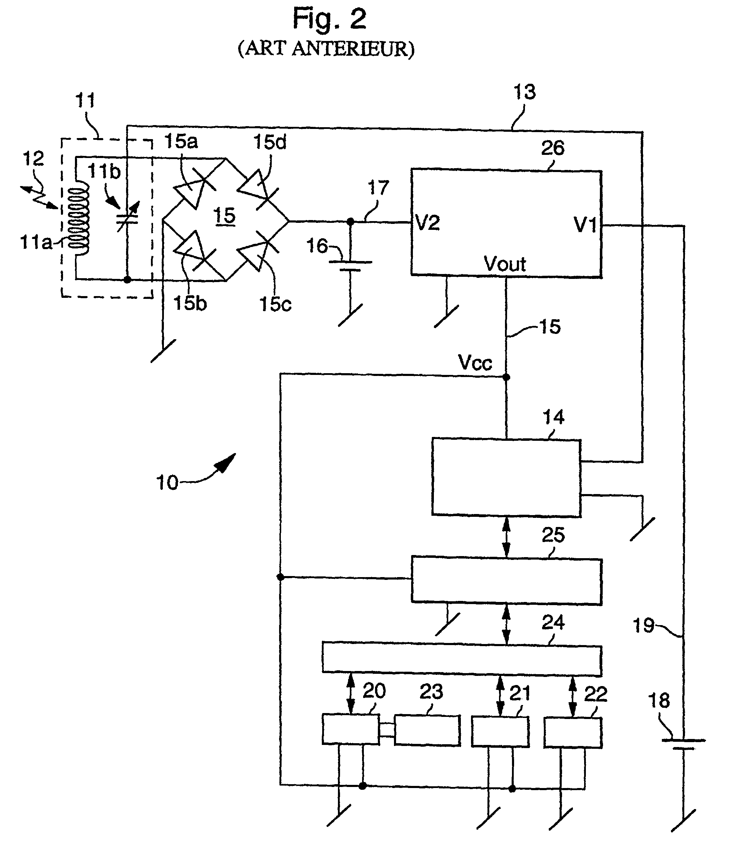

La figure 2 de la présente description représente un transpondeur dual 10 qui comprend un circuit d'antenne 11, un circuit de modulation-démodulation 14, un circuit de redressement 15, un condensateur de stockage 16, une batterie 18, une unité de traitement central 20, une mémoire ROM 21, une mémoire RAM 22, un système d'horloge 23 et un circuit de commutation 26.

Le circuit d'antenne 11 est agencé pour recevoir et transmettre des données de et vers un dispositif externe, sous forme dune onde radiofréquence 12. A cet effet, le circuit d'antenne 11 comprend une antenne 11a formée par une bobine et un condensateur 11b.

Le circuit de modulation-démodulation 14 est agencé pour moduler un signal numérique reçu d'un circuit de commande 25 en un signal analogique, et pour démoduler un signal analogique reçu par l'intermédiaire de l'antenne 11a en un signal numérique. La référence 13 désigne une ligne par laquelle un signal reçu est transféré de l'antenne 11a au circuit de modulation-démodulation 14, et par laquelle un signal à transmettre est transféré du circuit de modulation-démodulation 3 à l'antenne 11a. Le circuit de redressement 15 est formé par un pont de diodes 15a à 15d pour convertir une tension alternative de l'onde radiofréquence 12 reçue par l'antenne 11a en une tension continue V2. Le condensateur de stockage 16 est agencé pour stocker la tension continue redressée V2, cette dernière étant destinée à être fournie aux différents composants par l'intermédiaire d'une ligne de connexion 17.

L'unité de traitement central 20 est agencée pour traiter des données selon un programme d'exécution. La mémoire morte ROM 21 (acronyme provenant de l'anglais "Read-Only Memory") est agencée pour stocker le programme d'exécution. La mémoire vive RAM 22 (acronyme provenant de l'anglais "Random-Access Memory") est agencée pour stocker temporairement des données. Le système d'horloge 23 est agencé pour fournir un signal d'horloge en réponse duquel l'unité de traitement 20 fonctionne. La référence 24 désigne un bus par lequel sont transmises des données et des adresses.

La batterie 18 est agencée pour fournir une tension électrique V1 destinée à alimenter les différents composants du transpondeur 10, par l'intermédiaire d'une ligne de connexion 19. On note que la tension de fonctionnement du transpondeur 10 est de l'ordre de 5 V.

Le circuit de commutation 26 est connecté aux lignes 19 et 17, et est agencé de sorte que, quand la tension V2 présente aux bornes du condensateur de stockage 16 est supérieure à la tension V1, le transpondeur 10 fonctionne en utilisant la puissance électrique fournie par le condensateur de stockage 16, par l'intermédiaire de la ligne 17, et que, quand la tension V2 est inférieure à la tension V1, le transpondeur 10 fonctionne en utilisant la puissance électrique fournie par la batterie 1, par l'intermédiaire de la ligne 19.

Un inconvénient du transpondeur 10 réside dans le fait que, une fois la batterie 18 déchargée, l'alimentation électrique des composants du transpondeur 10 ne peut être fournie que par le condensateur de stockage 16. Dans le cas où le transpondeur 10 est incorpore dans une clé de porte d'un véhicule, ce transpondeur doit se trouver à une faible distance de la station de base de manière à recevoir de la station de base l'énergie suffisante à son fonctionnement. Autrement dit, une fois la batterie 18 déchargée, l'utilisateur de la clé doit attendre le temps nécessaire à la charge du condensateur 18, avant que l'identification puisse avoir lieu, ce qui peut être particulièrement désagréable pour cet utilisateur.

Un objet de la présente invention est de prévoir un transpondeur dual palliant les inconvénients des transpondeurs actifs classiques, notamment un transpondeur actif permettant d'entretenir un niveau d'alimentation suffisant pour assurer son fonctionnement.

Un autre objet de la présente invention est de prévoir un transpondeur actif répondant aux critères traditionnels dans l'industrie des semi-conducteurs, de complexité et de coût.

Ces objets, ainsi que d'autres, sont atteints par le transpondeur actif selon la revendication 1.

L'invention a pour objet un transpondeur actif comprenant notamment des premier et deuxième moyens pour comparer respectivement les premier et deuxième signaux d'alimentation à un seuil minimal fourni par un premier moyen de fourniture et, en réponse, fournir respectivement des premier et deuxième signaux de commande et un moyen de charge commandé par les premier et deuxième signaux de commande, et agencé de sorte que, lorsque les premier et deuxième signaux d'alimentation sont respectivement inférieur et supérieur au seuil minimal, l'accumulateur est chargé, par l'intermédiaire du moyen de charge, à partir de l'énergie contenue dans le moyen de stockage.

Un avantage d'un tel agencement du moyen de charge et des premier et deuxième moyens de comparaison est de commander une charge de l'accumulateur, dès que la première tension d'alimentation devient inférieure au seuil minimal.

Selon une autre caractéristique du transpondeur selon la présente invention, le seuil minimal correspond au niveau minimal de tension d'alimentation nécessaire pour assurer l'ensemble des fonctions du transpondeur, ce qui a pour avantage de fournir au transpondeur une alimentation suffisante pour assurer l'ensemble des fonctions de ce transpondeur.

Un autre avantage de la comparaison de la première tension d'alimentation à un tel seuil minimal est d'éviter que l'accumulateur ne se décharge complètement lors de son fonctionnement, ce qui évite de mettre le moyen de traitement en court-circuit.

Selon une autre caractéristique du transpondeur selon la présente invention, le premier moyen de comparaison peut comparer la première tension d'alimentation à un seuil maximal qui représente la limite supérieure de la charge de l'accumulateur, ce qui a pour avantage d'éviter une surcharge de l'accumulateur.

Selon une autre caractéristique du transpondeur selon la présente invention, le moyen de traitement est agencé pour recevoir l'énergie électrique du moyen de stockage lors de la charge de l'accumulateur, et de l'accumulateur, une fois ce dernier chargé. Un avantage d'un tel agencement du moyen de traitement est de pouvoir réaliser une commande centralisée de l'alimentation électrique des composants du transpondeur.

Ces objets, caractéristiques et avantages, ainsi que d'autres, de la présente invention apparaîtront plus clairement à la lecture de la description détaillée de trois modes de réalisation préférés de l'invention, donné à titre d'exemple uniquement, en relation avec les figures jointes, parmi lesquelles :
- la figure 1 déjà citée représente un transpondeur actif classique;
- la figure 2 déjà citée représente un transpondeur dual classique;
- la figure 3 représente un premier mode de réalisation préféré du transpondeur actif selon la présente invention;
- la figure 4 représente de façon détaillée un composant du transpondeur actif de la figure 3;
- la figure 5 représente un deuxième mode de réalisation du transpondeur actif selon la présente invention;
- la figure 6 représente une courbe illustrant la relation entre deux tensions électriques présentes dans le transpondeur actif de la figure 5;
- la figure 7 représente un troisième mode de réalisation du transpondeur actif selon la présente invention; et
- la figure 8 représente un chronogramme d'une tension électrique présente dans le transpondeur actif de la figure 5.

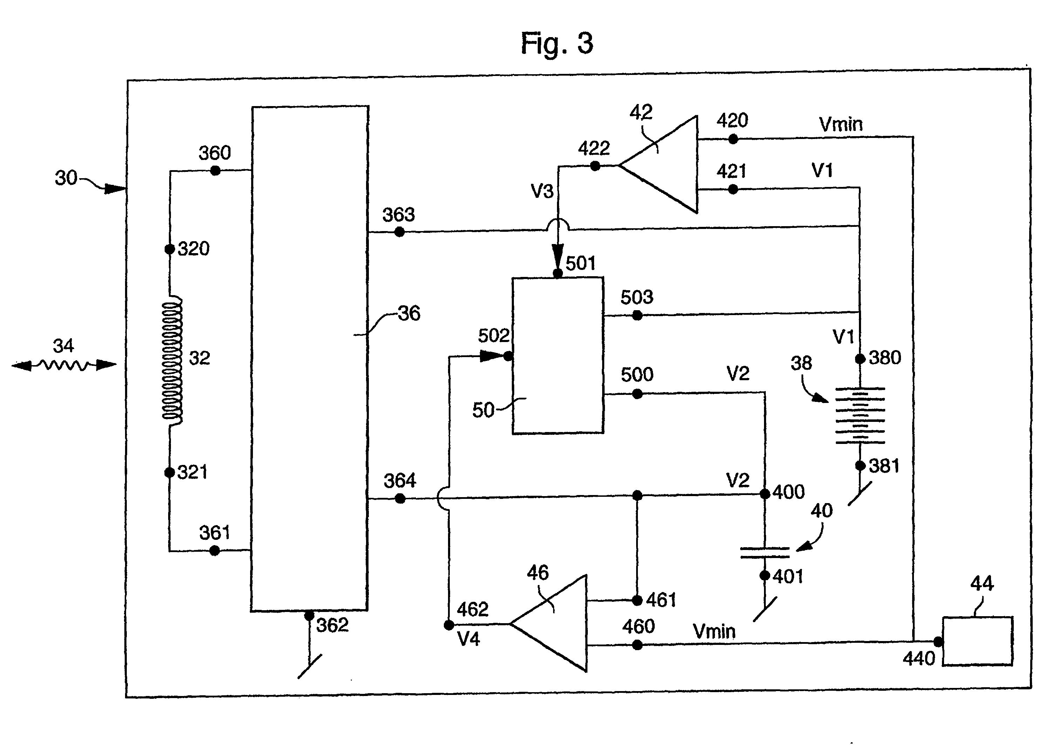

La figure 3 représente un premier mode de réalisation préféré du transpondeur actif selon la présente invention, désigné par la référence 30.

Le transpondeur 30 comprend une antenne 32, un moyen de traitement 36, un accumulateur 38 et un moyen de stockage 40.

L'antenne 32 est agencée pour pouvoir recevoir et transmettre des données de et vers un dispositif externe (par exemple une station de base classique), sous forme d'un signal radiofréquence 34. A cet effet, on réalise de préférence l'antenne 32 en utilisant une bobine connectée entre deux bornes de connexion 320 et 321, comme cela est connu en soi.

Le moyen de traitement 36 comprend en outre deux bornes de connexion 360 et 361 connectées respectivement aux bornes 320 et 321 de l'antenne 32. Le moyen de traitement 36 est agencé pour pouvoir recevoir de l'antenne 32 les données reçues, traiter ces données, et fournir l'antenne 32 des données d'identification à émettre sous la forme d'un signal radiofréquence. A cet effet, le moyen de traitement 36 comprend un bloc logique pouvant comprendre une unité de traitement central (non représentée en figure 3), un moyen de mémorisation (non représenté en figure 3), et un système d'horloge (non représenté en figure 3).

De préférence, on réalise ladite unité de traitement central, ledit moyen de mémorisation et ledit système d'horloge à l'instar des,composants décrits en relation avec la figure 2.

Le moyen de traitement 36 est agencé également pour pouvoir convertir le signal radiofréquence 34 en une source d'alimentation capable de fournir une tension continue V2. A cet effet, le moyen de traitement 36 comprend une interface comprenant un circuit de modulation-démodulation (non représenté en figure 3), un circuit de redressement (non représenté en figure 3) et une borne 364 connectée au moyen de stockage 40.

De préférence, on réalise ledit circuit de modulation-démodulation et ledit circuit de redressement à l'instar des composants décrits en relation avec la figure 2.

De préférence également, on réalise le moyen de stockage 40 en formant un condensateur comprenant une borne 400 connectée à la borne 364 du moyen de traitement 36, et une borne de masse 401 connectée à la masse du transpondeur 30, de sorte que la tension présente entre les bornes 400 et 401 est égale à la tension continue V2. A titre illustratif uniquement, le moyen de stockage 40 peut contenir une charge électrique équivalent à une tension de l'ordre de 2 à 6 V.

Le moyen de traitement 36 comprend une borne de masse 362 connectée à la masse du transpondeur 10, et une borne d'alimentation 363 destinée à recevoir une tension d'alimentation V1 fournie par l'accumulateur 38.

L'accumulateur 38 est agencé pour pouvoir fournir la tension d'alimentation V1, cette dernière devant être suffisante pour alimenter électriquement l'ensemble des composants du transpondeur 30. A cet effet, l'accumulateur 38 comprend une borne de fourniture 380 pour fournir la tension V1, et une borne de masse 381 connectée à la masse du transpondeur 30. De préférence, on réalise l'accumulateur 38 en utilisant un accumulateur classique.

Le transpondeur 30 comprend en outre deux moyens de comparaison 42 et 46, et un moyen de charge 50.

Le moyen de comparaison 42 est agencé pour pouvoir comparer la tension électrique V1 fournie par l'accumulateur à un seuil minimal de tension prédéterminé Vmin et, en réponse, fournir une tension électrique V3 de sorte que, quand la tension V1 est inférieure au seuil Vmin, la tension V3 est égale à un niveau de tension "0" et que, quand la tension V1 est supérieure au seuil Vmin, la tension V3 est égale à un niveau de tension "1".

A cet effet, le moyen de comparaison 42 comprend une première borne d'entrée 420 connectée à un moyen de fourniture 44, pour recevoir le seuil Vmin, et une seconde borne d'entrée 421 connectée à la borne 380 de l'accumulateur 38, pour recevoir la tension V1. Le moyen de comparaison 42 comprend également une borne de sortie 422, pour fournir la tension V3 contenant le résultat de la comparaison entre la tension V1 et le seuil Vmin. La borne de sortie 422 du moyen de comparaison 42 est connectée au moyen de charge 50, comme cela est décrit ci-après.

On réalise de préférence le moyen de comparaison 42 en utilisant un amplificateur opérationnel, comme cela est connu en soi.

Le moyen de fourniture 44 comprend une borne de sortie 440 connectée à la borne 420 du moyen de comparaison 42, pour fournir le seuil Vmin, ainsi qu'une borne d'alimentation et une borne de masse, ces dernières n'étant pas représentées en figure 3. Le moyen de fourniture 44 est agencé de sorte que la valeur du seuil Vmin est suffisante pour répondre à des critères prédéterminés de bon fonctionnement du transpondeur 30, c'est-à-dire pour déterminer si la valeur de tension fournie par l'accumulateur est suffisante pour alimenter électrique du transpondeur 30, c'est-à-dire pour assurer la réalisation de toutes les fonctions du transpondeur 30.

On réalise de préférence le moyen de fourniture 44 en utilisant une source de tension de référence classique.

A l'instar du moyen de comparaison 42, le moyen de comparaison 46 est agencé pour pouvoir comparer au seuil Vmin la tension électrique V2 présente aux bornes 400 et 401 du moyen de stockage 40 et, en réponse, fournir une tension électrique V4 de sorte que, quand la tension V2 est inférieure au seuil Vmin, la tension V4 est égale au niveau de tension "0" et que, quand la tension V2 est supérieure au seuil Vmin, la tension V4 est égale au niveau de tension "1".

A cet effet, le moyen de comparaison 46 comprend une première borne d'entrée 460 connectée à la borne 440 du moyen de fourniture 44, pour recevoir le seuil Vmin, et une seconde borne d'entrée 461 connectée à la borne 400 du moyen de stockage 40, pour recevoir la tension V2. Le moyen de comparaison 46 comprend également une borne de sortie 462, pour fournir la tension électrique V4 contenant le résultat de la comparaison entre la tension V2 et le seuil Vmin. La borne de sortie 462 du moyen de comparaison 46 est connectée au moyen de charge 50, comme cela est décrit ci-après.

On réalise de préférence le moyen de comparaison 15 en utilisant un amplificateur opérationnel, comme cela est connu en soi.

Le moyen de charge 50 est agencé pour pouvoir charger l'accumulateur 38 à partir de l'énergie stockée dans le moyen de stockage 40 (c'est-à-dire à partir de la tension V2), en réponse aux comparaisons des tensions V1 et V2 au seuil Vmin (c'est-à-dire en réponse aux tensions V3 et V4).

A cet effet, le moyen de charge 50 comprend une première borne d'entrée 500 connectée à la borne 400 du moyen de stockage 40, pour recevoir la tension V2, et des deuxième et troisième bornes d'entrée 501 et 502 connectées respectivement aux bornes de sortie 422 et 462, pour recevoir les tensions respectives V3 et V4. Le moyen de charge 50 comprend également une borne de sortie 503 connectée à la borne 380 de l'accumulateur 38, par laquelle la charge de l'accumulateur 38 a lieu, comme cela est décrit ci-après.

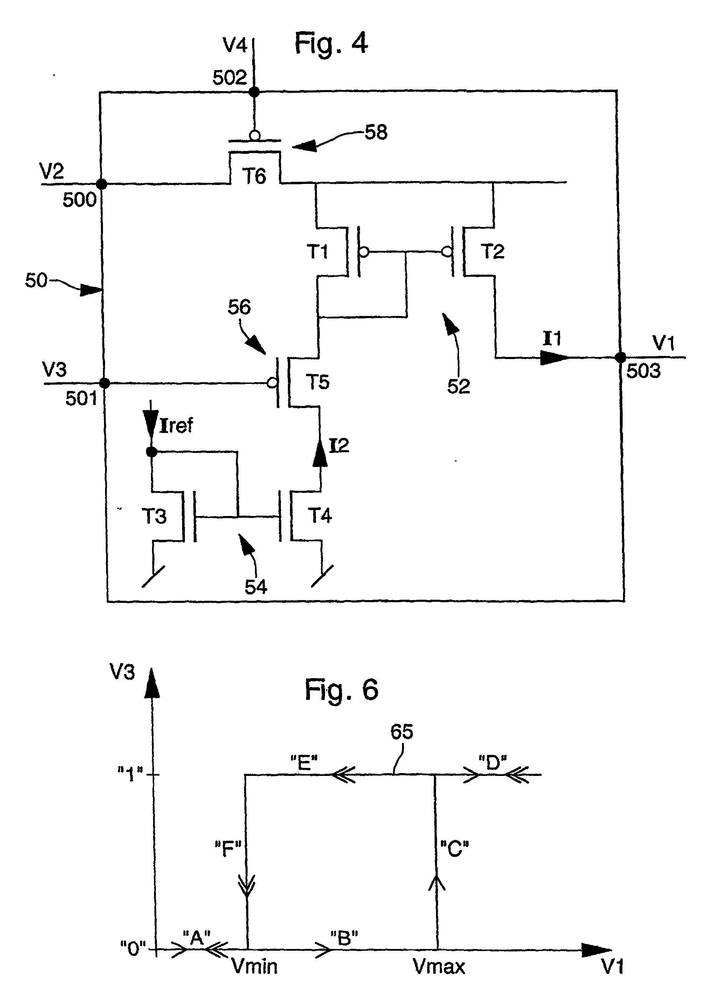

La figure 4 représente de façon détaillée le moyen de charge 50 du transpondeur actif 30 de la figure 3.

Comme le représente la figure 4, le moyen de charge 50 comprend un miroir de courant 52 pouvant fournir par la borne 503 un courant de charge I1, une source de courant 54 pouvant fournir un premier courant de référence I2, un premier commutateur 56 connecté à la borne 501, de manière à pouvoir être commandé par la tension V3, et un deuxième commutateur 58 connecté à la borne 502, de manière à pouvoir être commandé par la tension V4.

Le miroir de courant 52 est connecté à la borne 500, par l'intemédiaire du commutateur 58, de sorte que la tension V2 sert de tension d'alimentation pour le miroir de courant 52. Le miroir de courant 52 est également connecté à la source de courant 54, par l'intermédiaire du commutateur 56, de sorte que le courant I2 peut être recopié par le miroir de courant 52 sous la forme du courant I1.

De préférence, on réalise le miroir de courant 52 à partir de deux transistors à effet de champ T1 et T2, comme cela est connu en soi. De même, on réalise la source de courant 54 à partir d'un miroir de courant formé de deux transistors à effet de champ T3 et T4, ce miroir recevant un deuxième courant de référence Iref fourni par une source de courant stabilisée en température (non représentée en figure 4). En outre, on réalise les commutateurs 56 et 58 en formant respectivement deux transistors à effet de champ T5 et T6 commandés par les tensions V3 et V4, respectivement.

On note en figure 4 que les transistors T1, T2, T5 et T6 ont chacun un canal de type P, et que les transistors T3 et T4 ont chacun un canal de type N.

On va décrire brièvement le fonctionnement du moyen de charge 50, en réponse à la fourniture des tensions de commande V3 et V4 sur les bornes respectives 501 et 502 de ce moyen.

En se référant à nouveau à la figure 4, considérons une première situation où la tension V3 est égale au niveau "1". Il en résulte que le transistor T5 est bloqué, et la source de courant 54 n'est donc pas connectée au miroir de courant 52. Supposons en outre que la tension V4 est égale au niveau "1". Il en résulte que le transistor T6 est bloqué, et le miroir de courant 52 est alors alimenté par la tension V2 présente sur la borne 500.

Considérons maintenant une deuxième situation où les tensions V3 et V4 sont chacune égales au niveau "0". Il en résulte que les transistors T5 et T6 sont passants, et la source de courant 54 est alors connectée au miroir de courant 52 qui est lui-même alimenté par la tension V2. En conséquence, le miroir de courant 52 fournit le courant de charge I1, par la borne 503.

L'homme du métier note qu'un avantage de l'agencement du moyen de charge 50 et des moyens de comparaison 42 et 46 dans le transpondeur 30 est de commander une charge de l'accumulateur 38, dès que la tension V1 fournie par ce dernier devient inférieure au seuil Vmin, c'est-à-dire dès que l'accumulateur 38 ne peut plus assurer une alimentation électrique suffisante du transpondeur 30. Autrement dit, le transpondeur actif 30 a l'avantage de pouvoir recharger automatiquement l'accumulateur 38, dès que ce dernier n'est plus suffisamment chargé pour assurer toutes les fonctions du transpondeur 30.

De préférence, on réalise l'ensemble des composants du transpondeur 30, en formant une structure intégrée par des étapes de fabrication d'une filière de type CMOS connue en soi. Typiquement, dans leur mode de réalisation préféré respectif susmentionné, on réalise de façon monolithique, dans un unique substrat semi-conducteur, le moyen de traitement 36, le moyen de stockage 40, les moyens de comparaison 42 et 46, ainsi que le moyen de charge 50. A titre de variante, on peut prévoir de réaliser également de façon monolithique, en plus de ces composants, l'antenne 32.

A titre de variante de réalisation du transpondeur actif 30 de la figure 3, les figures 5 et 7 représentent deux transpondeurs actifs 60 et 70, respectivement. On note que les structures des transpondeurs 60 et 70 sont proches de celle du transpondeur 30. Ainsi, les objets des transpondeurs 60 et 70 identiques à ceux décrits en relation avec la figure 3 ont été désignés par les mêmes références.

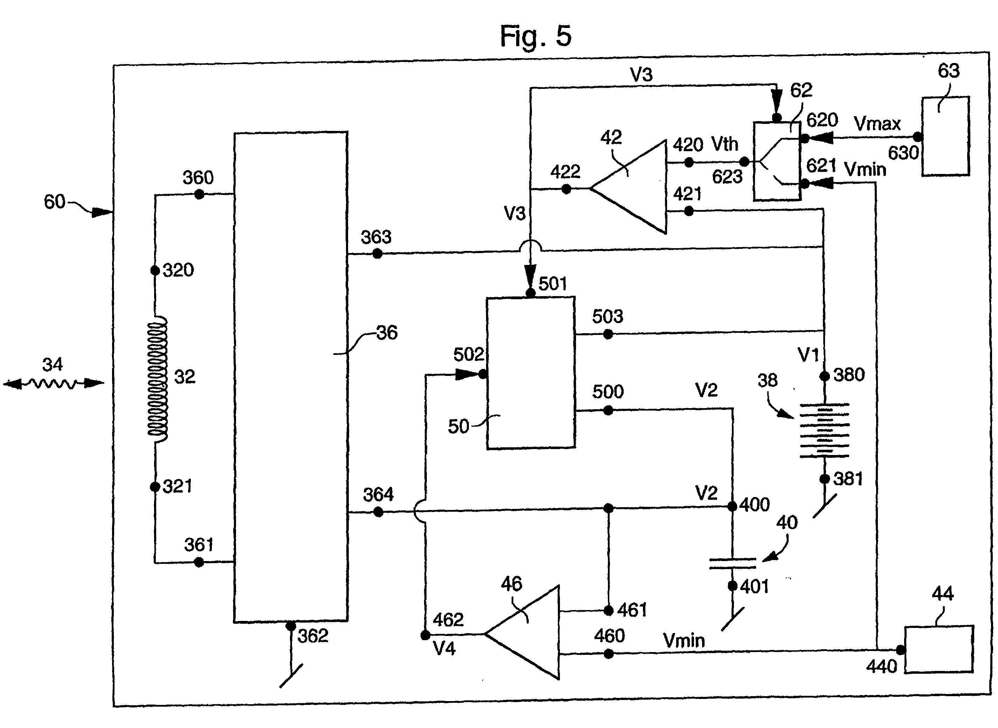

Comme le représente la figure 5, le transpondeur 60 comprend en outre un moyen de commutation 62 et un moyen de fourniture supplémentaire 63, ces composants étant connectés au moyen de comparaison 42 pour former un comparateur à double seuil, afin d'éviter une surcharge de l'accumulateur 38, comme cela est décrit ci-après.

Le moyen de fourniture 63 comprend une borne de sortie 630 connectée au moyen de commutation 62, pour fournir un seuil maximal de tension Vmax, ainsi qu'une borne d'alimentation et une borne de masse, ces dernières n'étant pas représentées en figure 5. Le moyen de fourniture 63 est agencé de sorte que la valeur du seuil Vmax représente la limite supérieure de la charge de l'accumulateur 38. On réalise de préférence le moyen de fourniture 63 en utilisant une source de tension de référence stable en température.

Le moyen de commutation 62 est agencé pour pouvoir fournir au moyen de comparaison 42 un seuil Vth qui est égal soit au seuil Vmin, soit au seuil Vmax, en fonction du résultat de la comparaison de la tension V1.

A cet effet, le moyen de commutation 62 comprend deux bornes d'entrée 620 et 621 connectées respectivement à la borne 630 du moyen de fourniture 63 et à la borne 440 du moyen de fourniture, pour recevoir respectivement le seuil maximal Vmax et le seuil minimal Vmin. Le moyen de commutation 62 comprend en outre une borne de commande 622 connectée à la borne 422 du moyen de comparaison 42, pour recevoir la tension V3, et une borne de sortie 623 connectée à la borne 420 du moyen de comparaison 42, pour fournir le seuil Vth.

On réalise de préférence le moyen de commutation 62 en utilisant deux portes de transmission classiques.

On va décrire brièvement le fonctionnement de l'agencement du moyen de comparaison 42 et du moyen de commutation 62.

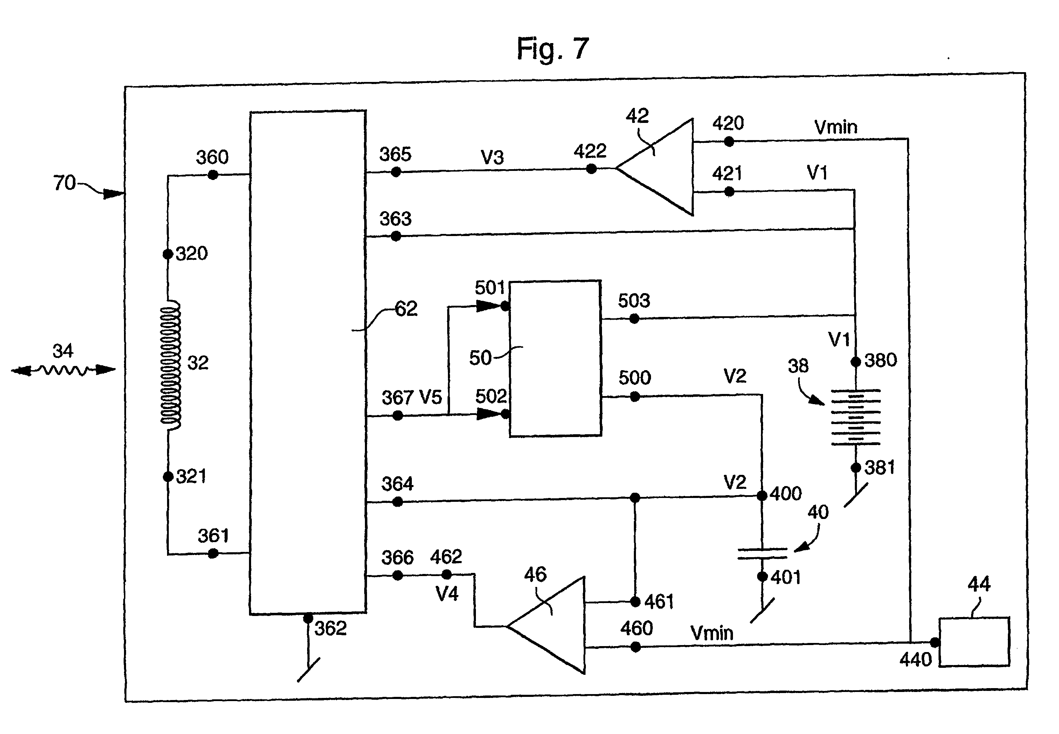

La figure 6 représente une courbe 65 illustrant la relation entre la tension V1 fournie par l'accumulateur 38 et la tension V3 fournie par le moyen de comparaison 42, cette courbe comprenant six segments "A" à "F".

Considérons une première situation où la tension V1 croit ou décroît de manière à être inférieure au seuil Vmin. Dans cette situation, la tension V3 est égale à un premier niveau de tension désigné "0", comme le représente le segment "A" de la figure 6.

Considérons maintenant une deuxième situation où la tension V1 croit de manière à être supérieure au seuil Vmin, mais inférieure au seuil Vmax. Dans cette situation, la tension V3 est égale au niveau "0", comme le représente le segment "B" de la figure 6.

Considérons maintenant une troisième situation où la tension V1 atteint le seuil Vmax. Dans cette situation, la tension V3 croit brutalement du niveau "0" à un deuxième niveau de tension désigné "1", comme le représente le segment "C" de la figure 6.

Considérons maintenant une quatrième situation où la tension V1 croît ou décroît de manière à être supérieure au seuil Vmax. Dans cette situation, la tension V3 est égale au niveau "1", comme le représente le segment "D" de la figure 6.

Considérons maintenant une cinquième situation où la tension V1 décroît de manière à être inférieure au seuil Vmax, mais supérieure au seuil Vmin. Dans cette situation, la tension V3 est égale au niveau "1", comme le représente le segment "E" de la figure 6.

Considérons maintenant une sixième situation où la tension V1 décroît de manière à dépasser le seuil Vmin. Dans cette situation, la tension V3 décroît brutalement du niveau "1" au niveau "0", comme le représente le segment "F" de la figure 6.

L'homme du métier note qu'un tel agencement du moyen de commutation 62 et du moyen de comparaison 42 constitue un comparateur à double seuil. L'homme du métier note également que le transpondeur 60 forme un perfectionnement du transpondeur 30 de la figure 3, puisque le transpondeur 60 tient compte de la limite supérieure de charge de l'accumulateur 38, ce qui réalise avantageusement une sécurité pour l'intégrité de cet accumulateur.

Il va de soi qu'un tel comparateur à double seuil peut être réalisé par d'autres composants que ceux décrits en relation avec la figure 5, tout en réalisant la même fonction que celle décrite en relation avec la figure 6.

En se référant maintenant au transpondeur 70 de la figure 7, le moyen de traitement 36 comprend en outre deux bornes d'entrée 365 et 366 connectées respectivement à la borne de sortie 422 du moyen de comparaison 42 et à la borne de sortie 462 du moyen de comparaison 46, et une borne de sortie 367 connectée aux bornes 501 et 502 du moyen de charge 50.

En outre, le moyen de traitement 36 de la figure 7 est programmé de manière à pouvoir fournir, par la borne 367, une tension de commande V5 au moyen de charge 50, en réponse aux tensions électriques V3 et V4 reçues par les bornes respectives 365 et 366. On note qu'une telle commande du moyen de charge 50 est réalisée de façon identique à la commande décrite en relation avec les figures 3 et 4. A cet effet, la tension de commande V5 comprend des premier et deuxième bits contenant les états respectifs des tensions V3 et V4.

Un avantage d'un tel agencement du moyen de traitement 36 est de pouvoir réaliser une commande centralisée de l'alimentation électrique des composants du transpondeur 70. En effet, le moyen de traitement 36 peut être agencé de manière à pouvoir être connecté : au moyen de stockage 40 par la borne 364, lors de la charge de l'accumulateur 38 (c'est-à-dire quand les tensions V3 et V4 sont égales aux niveaux respectifs "0" et "1"), de sorte que l'énergie électrique nécessaire à alimenter le transpondeur 70 est fournie par le moyen de stockage 40; et à l'accumulateur 38 par la borne 363, une fois l'accumulateur 38 chargé (c'est-à-dire quand la tension V3 est égale au niveau "1"), de sorte que l'énergie électrique nécessaire à alimenter le transpondeur 70 est fournie par l'accumulateur 38.

L'homme du métier note que, lors de la charge de l'accumulateur 38, le transpondeur 70 fonctionne à l'instar d'un transpondeur passif. En effet, l'alimentation électrique est alors fournie par le moyen de stockage 40 qui contient l'énergie reçue par l'antenne 32, à partir du signal radiofréquence 34 émis par ladite station de base.

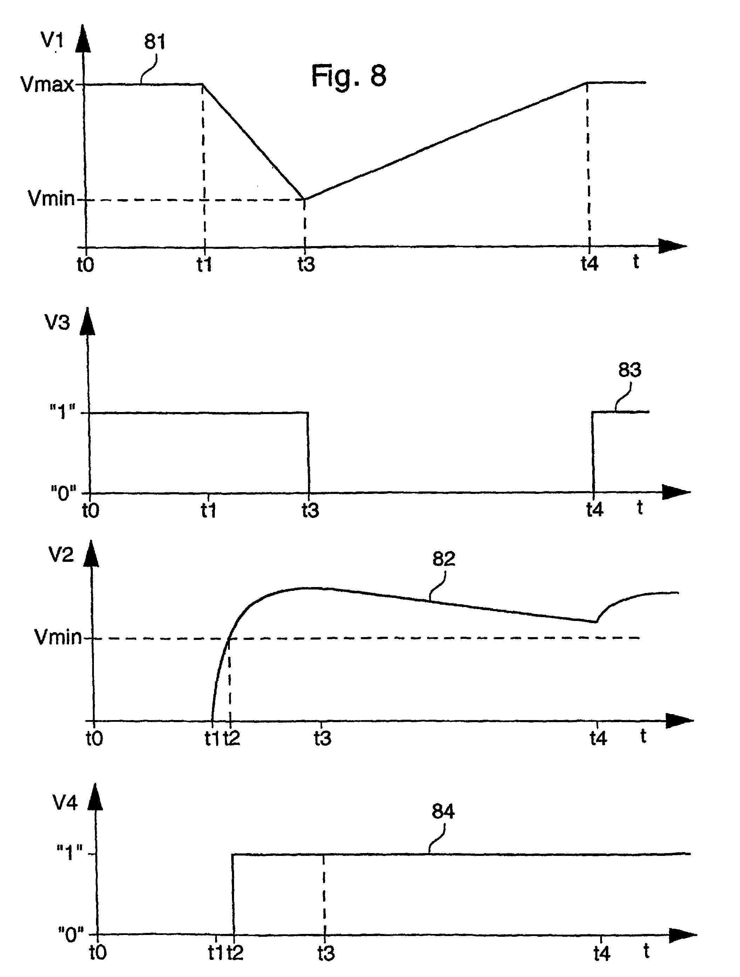

On va décrire le fonctionnement du transpondeur 60, en se référant à nouveau aux figures 4 à 6 décrites ci-dessus, et à l'aide de la figure 8 qui représente quatre chronogrammes 81 à 84 illustrant les évolutions temporelles des tensions V1 à V4, respectivement.

Considérons la situation initiale où la tension V1 fournie par l'accumulateur 38 est égale au seuil Vmax, comme l'illustre le chronogramme 81 entre des instants t0 et t1. Dans ce cas, la tension V3 fournie par le moyen de comparaison 42 est égale au niveau "1", entre les instants t0 et t1.

Supposons maintenant que l'instant t1 corresponde à un instant à partir duquel le transpondeur 60 se trouve dans le champ magnétique d'une station de base qui émet des données et de l'énergie sous la forme du signal radiofréquence 34. Autrement dit, à partir de l'instant t1, l'antenne 32 du transpondeur 60 reçoit sous la forme du signal radiofréquence 34 des données et de l'énergie.

A partir de l'instant t1, le moyen de stockage 40 reçoit ladite énergie de l'antenne 32, par l'intermédiaire du moyen de traitement 36, de sorte que la tension V2 croît jusqu'à dépasser le seuil Vmin à un instant t2. Il en ressort que, à l'instant t2, la tension V4 fournie par le moyen de comparaison 46 passe du niveau "0" au niveau "1". Au-delà de l'instant t2, la tension V2 continue à croître jusqu'à un niveau maximal correspondant à la charge maximale que le moyen de stockage 40 peut stocker. Par conséquent, au-delà de l'instant t2, la tension V4 est égale au niveau "1".

A partir de l'instant t1, le transpondeur 60 reçoit également lesdites données de l'antenne 32, et traite ces données, ce qui occasionne une consommation de puissance électrique. Ceci se traduit par une baisse du niveau de la tension V1, à partir de l'instant t1. Tant que le transpondeur 60 se trouve dans ledit champ magnétique, et fonctionne, le niveau de la tension V1 continue à baisser jusqu'à atteindre le seuil Vmin, à un instant t3.

A partir de l'instant t3, la tension V1 continue de diminuer et devient inférieure au seuil Vmin, tandis que la tension V2 est supérieure au niveau Vmin. Il en résulte que, à l'instant t3, la tension V3 passe du niveau "1" au niveau "0". Il en résulte que le courant de charge I1 est fourni à l'accumulateur 38, comme cela a déjà été décrit ci-dessus en relation avec la figure 4. Autrement dit, à partir de l'instant t3, le moyen de charge 50 est commandé pour réaliser la charge de l'accumulateur 38. Il en ressort une croissance de la tension V1, et une baisse de la tension V2.

L'homme du métier note que, dune part, le moyen de stockage 40 fournit de l'énergie au moyen de charge 50 pour charger l'accumulateur 38 et que, d'autre part, il reçoit de l'énergie de la station de base, par l'intermédiaire de l'antenne 32.

A un instant t4, la tension V1 croit et atteint le seuil Vmax, ce qui se traduit par un passage de la tension V3 du niveau "0" au niveau "1". Autrement dit, à l'instant t4, la charge stockée dans l'accumulateur 38 est maximale, et la source de courant 54 du moyen de charge 50 n'est plus connectée au miroir de courant 52 : la charge de l'accumulateur 38 par le moyen de charge 50 est terminée.

A titre illustratif uniquement, le transpondeur selon la présente invention peut être avantageusement utilisé dans une clé de porte d'un véhicule, ce dernier pouvant réaliser à distance l'identification de la clé. En se référant à nouveau à la figure 5, le transpondeur 60 peut fonctionner dans le cadre de cette application selon trois modes différents : mode "repos", mode "identification" et mode "charge".

En mode "repos" (c'est-à-dire dans le cas où la clé est éloignée de plusieurs centaines de mètres du véhicule), aucun transfert de données, ni d'énergie ne se produit entre l'antenne 32 et le véhicule. Dans ce cas, l'accumulateur 38 ne se décharge que très faiblement. Ce mode est proche de la situation décrite en relation avec le chronogramme 81 entre les instants t0 et t1.

En mode "identification" (c'est-à-dire dans le cas où la clé se trouve à proximité du véhicule), des données sont échangées entre la clé et le véhicule, à l'instar d'un transpondeur actif classique. Il en résulte une consommation notable de puissance électrique, et l'accumulateur 38 se décharge. Ce mode est proche de la situation décrite en relation avec le chronogramme 81 entre les instants t1 et t3.

En mode "charge" (c'est-à-dire dans le cas où la clé est en contact intime avec le véhicule), de l'énergie est transférée du véhicule vers la clé, ce qui permet une charge de l'accumulateur 38 par l'intermédiaire du moyen de charge 50. Ce mode est proche de la situation décrite en relation avec le chronogramme 81 entre les instants t3 et t4.

Il va de soi pour l'homme du métier que la description détaillée ci-dessus peut subir diverses modifications sans sortir du cadre de la présente invention. A titre de variante, on peut réaliser le moyen de charge du transpondeur selon la présente invention, en formant des transistors à effet de champ ayant chacun un canal dont le type de conductivité est opposé à celui décrit en relation avec la figure 4.

## Revendications

1. Transpondeur actif (30; 60; 70) comprenant
- une antenne (32) agencée pour pouvoir recevoir et émettre un signal radioélectrique (34) contenant des données;
- un moyen de traitement (36) connecté à ladite antenne, et agencé pour pouvoir fournir à ladite antenne des données d'identification à émettre sous forme de signal radioélectrique;
- un accumulateur (38) agencé pour pouvoir fournir un premier signal d'alimentation électrique (V1) aux composants dudit transpondeur; et
- un moyen de stockage (40) agencé pour pouvoir stocker de l'énergie électrique provenant dudit signal radioélectrique reçu par ladite antenne, et fournir un deuxième signal d'alimentation électrique (V2), ce transpondeur étant **caractérisé en ce qu'**il comprend en outre :
- des premier et deuxième moyens (42, 46) pour comparer respectivement lesdits premier et deuxième signaux d'alimentation à un seuil minimal (Vmin) fourni par un premier moyen de fourniture (44) et, en réponse, fournir respectivement des premier et deuxième signaux de commande (V3, V4); et
- un moyen de charge (50) commandé par lesdits premier et deuxième signaux de commande (V₃,V₄), et agencé de sorte que, lorsque lesdits premier et deuxième signaux d'alimentation (V₁,V₂) sont respectivement inférieur et supérieur audit seuil minimal (Vₘᵢₙ), ledit accumulateur (38) est chargé, par l'intermédiaire dudit moyen de charge, à parti de l'énergie contenue dans ledit moyen de stockage (40)

2. Transpondeur (30; 60; 70) selon la revendication 1, **caractérisé en ce que** ledit seuil minimal (Vmin) correspond au niveau minimal d'alimentation électrique nécessaire pour assurer l'ensemble des fonctions dudit transpondeur.

3. Transpondeur (30; 60; 70) selon la revendication 1, **caractérisé en ce que** ledit moyen de charge (50) comprend un premier miroir de courant (52) pouvant fournir un courant de charge (I1), une source de courant (54) pouvant fournir un premier courant de référence (I2), des premier et deuxième commutateurs (56, 58) commandés respectivement par lesdits premier et deuxième signaux de commande (V3, V4), et **en ce que** ledit premier miroir de courant (52) est agencépour pouvoir : être alimenté par ledit deuxième signal d'alimentation (V2), en fonction de l'état dudit premier commutateur; et être connecté à ladite source de courant (54), en fonction de l'état dudit deuxième commutateur, de sorte que, quand lesdits premier et deuxième commutateurs sont passants, ledit premier courant de référence est recopié par ledit premier miroir de courant sous la forme dudit courant de charge.

4. Transpondeur (30; 60; 70) selon la revendication 3, **caractérisé en ce que** ledit premier miroir de courant (52) est formé de premier et deuxième transistors à effet de champ (T1, T2), **en ce que** ladite source de courant (54) est formée d'un deuxième miroir de courant comprenant des troisième et quatrième transistors à effet de champ (T3, T4), et recevant un deuxième courant de référence (Iref) fourni par une source de courant stabilisée en température, et **en ce que** lesdits premier et deuxième commutateurs (56, 58) sont formés respectivement de cinquième et sixième transistors à effet de champ (T5, T6) commandés par lesdits premier et deuxième signaux de commande (V3, V4), respectivement.

5. Transpondeur (30; 60; 70) selon la revendication 4, **caractérisé en ce que** lesdits premier, deuxième, cinquième et sixième transistors à effet de champ (T1, T2, T5, T6) ont chacun un canal d'un premier type de conductivité (P), et **en ce que** lesdits troisième et quatrième transistors à effet de champ (T3, T4) ont chacun un canal d'un deuxième type de conductivité (N) différent dudit premier type de conductivité.

6. Transpondeur (60) selon la revendication 1, **caractérisé en ce qu'**il comprend en outre un comparateur à double seuil comprenant : ledit premier moyen de comparaison (42) et un moyen de commutation (62) pouvant recevoir ledit premier signal de commande (V3) et, en réponse, fournir audit premier moyen de comparaison (42) un seuil (Vth) qui est égal soit audit seuil minimal (Vmin) soit à un seuil maximal (Vmax) fourni par un deuxième moyen de fourniture (63).

7. Transpondeur (60) selon la revendication 6, **caractérisé en ce que** ledit seuil maximal (Vmax) représente la limite supérieure de la charge dudit accumulateur (38).

8. Transpondeur (70) selon la revendication 1, **caractérisé en ce que** ledit moyen de traitement (36) est agencé pour pouvoir recevoir lesdits premier et deuxième signaux de commande (V3, V4) et, en réponse, fournir un troisième signal de commande (V5) pouvant entraîner la charge dudit accumulateur (38).

9. Transpondeur (70) selon la revendication 8, **caractérisé en ce que** ledit moyen de traitement (36) est agencé pour recevoir l'énergie électrique nécessaire à alimenter ledit transpondeur : dudit moyen de stockage (40), lors de la charge dudit accumulateur (38); et dudit accumulateur 38, une fois que ce dernier est suffisamment chargé.

10. Transpondeur actif (30; 60; 70) selon la revendication 1, **caractérisé en ce que** ledit moyen de traitement (36), ledit moyen de stockage (40), lesdits premier et deuxième moyens de comparaison (42, 46) et ledit moyen de charge (50) sont réalisés de façon monolithique dans un unique substrat semi-conducteur.

11. Transpondeur actif (30 ; 60 ; 70) selon la revendication 10, **caractérisé en ce que** ladite antenne (32) est réalisée de façon monolithique dans ledit substrat.

12. Dispositif portatif comprenant un transpondeur actif (30; 60; 70) selon l'une quelconque des revendications précédentes.

## Claims

1. Active transponder (30; 60; 70), including
- an antenna (32) arranged so as to be able to receive and transmit a radioelectric signal (34) containing data;
- processing means (36) connected to said antenna, and arranged so as to be able to provide said antenna with identification data to be transmitted in the form of radioelectric signals;
- an accumulator (38) arranged so as to be able to supply a first electric power supply signal (V1 ) to the components of said transponder; and
- storage means (40) arranged so as to be able to store the electric energy originating from said radioelectric signal received by said antenna, and to supply a second electric power supply signal (V2),
this transponder being **characterised in that** it further includes :
- first and second means (42, 46) for comparing respectively said first and second power supply signals to a minimum threshold (Vmin) provided by first supply means (44) and, in response, providing respectively first and second control signals (V3, V4); and
- charging means (50) controlled by said first and second control signals (V3, V4), and arranged so that, when said first and second power supply signals (V1, V2) are respectively less and greater than said minimum threshold (Vmin), said accumulator is charged (38), via said charging means, from the power contained in said storage means (40).

2. Transponder (30; 60; 70) according to claim 1, **characterised in that** said minimum threshold (Vmin) corresponds to the minimum electric power supply level necessary to assure all the functions of said transponder.

3. Transponder (30; 60; 70) according to claim 1, **characterised in that** said charging means (50) include a first current mirror (52) able to supply a charging current (11 ), a current source (54) able to supply a first reference current (12), first and second switches (56, 58) controlled respectively by said first and second control signals (V3, V4), and **in that** said first current mirror (52) is arranged so as to be able to: be supplied by said second power supply signal (V2), as a function of the state of said first switch; and be connected to said current source (54), as a function of the state of said second switch, so that, when said first and second switches are conductive, said first reference current is recopied by said first current mirror in the form of said charging current.

4. Transponder (30; 60; 70) according to claim 3, **characterised in that** said first current mirror (52) is formed of first and second field effect transistors (T1, T2), **in that** said current source (54) is formed of a second current mirror including third and fourth field effect transistors (T3, T4), and receiving a second reference current (lref) supplied by a temperature stabilised current source, and **in that** said first and second switches (56, 58) are formed respectively of fifth and sixth field effect transistors (T5, T6) controlled by said first and second control signals (V3, V4) respectively.

5. Transponder (30; 60; 70) according to claim 4, **characterised in that** said first, second, fifth and sixth field effect transistors (T1, T2, T5, T6) each have a channel of a first type of conductivity (P), and **in that** said third and fourth field effect transistors (T3, T4) each have a channel of a second type of conductivity (N) which is different from said first type of conductivity.

6. Transponder (60) according to claim 1, **characterised in that** it further includes a double threshold comparator including : said first comparison means (42) and switching means (62) able to receive said first control signal (V3) and, in response, to supply said first comparison means (42) with a threshold (Vth) which is equal either to said minimum threshold (Vmin) or to a maximum threshold (Vmax) provided by second supply means (63).

7. Transponder (60) according to claim 6, **characterised in that** said maximum threshold (Vmax) represents the upper charge limit of said accumulator (38).

8. Transponder (70) according to claim 1, **characterised in that** said processing means are arranged so as to be able to receive said first and second control signals (V3, V4) and, in response, to supply a third control signal (V5) able to cause said accumulator (38) to be charged.

9. Transponder (70) according to claim 8, **characterised in that** said processing means (36) are arranged so as to be able to receive the electric power necessary to supply said transponder: from said storage means (40), when said accumulator (38) is being charged; and from said accumulator (38) once the latter is charged sufficiently.

10. Active transponder (30; 60; 70) according to claim 1, **characterised in that** said processing means (36), said storage means (40), said first and second comparison means (42, 46) and said charging means (50) are made in a monolithic manner is a single semiconductor substrate.

11. Active transponder (30; 60; 70) according to claim 10, **characterised in that** said antenna (32) is made in a monolithic manner in said substrate.

12. Portable device including an active transponder (30; 60; 70) according to any one of the preceding claims.

## Patentansprüche

1. Aktiver Transponder (30; 60; 70), der umfaßt:
- eine Antenne (32), die so beschaffen ist, daß sie ein funkelektrisches Signal (34), das Daten enthält, empfangen und senden kann;
- Verarbeitungsmittel (36), die an die Antenne angeschlossen und so beschaffen sind, daß sie an die Antenne Kennungsdaten liefern können, die in Form des funkelektrischen Signals ausgesendet werden sollen;
- einen Akkumulator (38), der so beschaffen ist, daß er ein erstes Stromversorgungssignal (V1) an die Komponenten des Transponders liefern kann; und
- ein Speichermittel (40), das so beschaffen ist, daß es die elektrische Energie, die von dem von der Antenne empfangenen funkelektrischen Signal stammt, speichern und ein zweites Stromversorgungssignal (V2) liefern kann, wobei dieser Transponder **dadurch gekennzeichnet ist, daß** er außerdem umfaßt:
- erste und zweite Mittel (42, 46), die das erste bzw. das zweite Versorgungssignal mit einem minimalen Schwellenwert (Vmin), der von einem ersten Bereitstellungsmittel (44) geliefert wird, vergleichen und in Reaktion darauf ein erstes bzw. ein zweites Steuersignal (V3, V4) liefern; und
- ein Lademittel (50), das durch das erste und das zweite Steuersignal (V3, V4) gesteuert wird und so beschaffen ist, daß es dann, wenn das erste und das zweite Versorgungssignal (V1, V2) kleiner bzw. größer als der minimale Schwellenwert (Vmin) ist, der Akkumulator (38) über das Lademittel mit der in dem Speichermittel (40) enthaltenen Energie geladen wird.

2. Transponder (30; 60; 70) nach Anspruch 1, **dadurch gekennzeichnet, daß** der minimale Schwellenwert (Vmin) dem minimalen Stromversorgungspegel entspricht, der für die Sicherstellung der Gesamtheit der Funktionen des Transponders notwendig ist.

3. Transponder (30; 60; 70) nach Anspruch 1, **dadurch gekennzeichnet, daß** das Lademittel (50) einen ersten Stromspiegel (52), der einen Ladestrom (11) liefern kann, eine Stromquelle (54), die einen ersten Referenzstrom (12) liefern kann, und einen ersten sowie einen zweiten Umschalter (56, 58), die durch das erste bzw. das zweite Steuersignal (V3, V4) gesteuert werden, umfaßt und daß der erste Stromspiegel (52) so beschaffen ist, daß er von dem zweiten Versorgungssignal (V2) in Abhängigkeit von dem Zustand des ersten Umschalters versorgt werden kann; und an die Stromquelle (54) in Abhängigkeit vom Zustand des zweiten Umschalters angeschlossen werden kann, derart, daß dann, wenn der erste und der zweite Umschalter durchschalten, der erste Referenzstrom durch den ersten Stromspiegel in Form des Ladestroms kopiert wird.

4. Transponder (30; 60; 70) nach Anspruch 3, **dadurch gekennzeichnet, daß** der erste Stromspiegel (52) aus einem ersten und aus einem zweiten Feldeffekttransistor (T1, T2) gebildet ist, daß die Stromquelle (54) aus einem zweiten Stromspiegel gebildet ist, der einen dritten und einen vierten Feldeffekttransistor (T3, T4) umfaßt und einen zweiten Referenzstrom (Iref) empfängt, der von einer temperaturstabilisierten Stromquelle geliefert wird, und daß der erste und der zweite Umschalter (56, 58) aus einem fünften bzw. einem sechsten Feldeffekttransistor (T5, T6) gebildet sind, die durch das erste bzw. das zweite Steuersignal (V3, V4) gesteuert werden.

5. Transponder (30; 60; 70) nach Anspruch 4, **dadurch gekennzeichnet, daß** der erste, der zweite, der fünfte und der sechste Feldeffekttransistor (T1, T2, T5, T6) jeweils einen Kanal eines ersten Leitfähigkeitstyps (P) besitzen und daß der dritte und der vierte Feldeffekttransistor (T3, T4) jeweils einen Kanal eines zweiten Leitfähigkeitstyps (N), der vom ersten Leitfähigkeitstyp verschieden ist, besitzen.

6. Transponder (60) nach Anspruch 1, **dadurch gekennzeichnet, daß** er außerdem einen Komparator mit zwei Schwellenwerten umfaßt, der enthält: das erste Vergleichsmittel (42) und ein Umschaltmittel (62), das das erste Steuersignal (V3) empfangen kann und in Reaktion darauf an das erste Vergleichsmittel (42) einen Schwellenwert (Vth) liefert, das entweder gleich dem minimalen Schwellenwert (Vmin) oder einem maximalen Schwellenwert (Vmax), der von einem zweiten Bereitstellungsmittel (63) geliefert wird, ist.

7. Transponder (60) nach Anspruch 6, **dadurch gekennzeichnet, daß** der maximale Schwellenwert (Vmax) die obere Grenze der Ladung des Akkumulators (38) darstellt.

8. Transponder (70) nach Anspruch 1, **dadurch gekennzeichnet, daß** das Verarbeitungsmittel (36) so beschaffen ist, daß es das erste und das zweite Steuersignal (V3, V4) empfangen kann und in Reaktion darauf ein drittes Steuersignal (V5) liefern kann, das das Laden des Akkumulators (38) bewirken kann.

9. Transponder (70) nach Anspruch 8, **dadurch gekennzeichnet, daß** das Verarbeitungsmittel (36) so beschaffen ist, daß es die für die Versorgung des Transponders notwendige elektrische Energie entweder von dem Speichermittel (40), wenn der Akkumulator (38) geladen wird; oder von dem Akkumulator (38), sobald dieser ausreichend geladen ist, empfängt.

10. Aktiver Transponder (30; 60; 70) nach Anspruch 1, **dadurch gekennzeichnet, daß** das Verarbeitungsmittel (36), das Speichermittel (40), das erste und das zweite Vergleichsmittel (42, 46) und das Lademittel (50) auf einem einzigen Halbleitersubstrat monolithisch hergestellt sind.

11. Aktiver Transponder (30; 60; 70) nach Anspruch 10, **dadurch gekennzeichnet, daß** die Antenne (32) in dem Substrat monolithisch hergestellt ist.

12. Tragbare Vorrichtung, die einen aktiven Transponder (30; 60; 70) nach einem der vorhergehenden Ansprüche enthält.
